Europäisches Patentamt

European Patent Office

Office européen des brevets

(11) Veröffentlichungsnummer: **0 157 955**
**B1**

(12) **EUROPÄISCHE PATENTSCHRIFT**

(45) Veröffentlichungstag der Patentschrift:
**01.04.87**

(21) Anmeldenummer: **84201855.8**

(22) Anmeldetag: **13.12.84**

(51) Int. Cl.⁴: **C 08 L 63/00,** C 08 G 59/14

(54) **Lagerstabile, wärmehärtbare Mischungen auf Epoxidharzbasis und Verfahren zu ihrer Herstellung.**

(30) Priorität: **15.03.84 DE 3409499**

(43) Veröffentlichungstag der Anmeldung:
**16.10.85 Patentblatt 85/42**

(45) Bekanntmachung des Hinweises auf die Patenterteilung:
**01.04.87 Patentblatt 87/14**

(84) Benannte Vertragsstaaten:
**CH DE FR GB IT LI NL**

(56) Entgegenhaltungen:
**CH - A - 450 730**
**CH - A - 637 150**

(73) Patentinhaber: **Rütgerswerke Aktiengesellschaft,
Mainzer Landstrasse 217, D-6000 Frankfurt a.Main 1 (DE)**

(72) Erfinder: **Herzog, Rolf, Dr., Beethovenstrasse 14,
D-4250 Bottrop (DE)**
Erfinder: **Tichy, Dietrich, Ringstrasse 43, D-5873 Ihmert
(DE)**
Erfinder: **Heerdegen, Harald, Zum Hohenhof 28,
D-5800 Hagen 8 (DE)**
Erfinder: **Kraas, Rolf, Fohlenkamp 32, D-5860 Iserlohn
(DE)**
Erfinder: **Grundke, Ulrich, Bronkhorststrasse 52,
D-4100 Duisburg 12 (DE)**

## Beschreibung

Die Erfindung betrifft hochwertige Mischungen mit einem Bindemittel auf Epoxidharzbasis, die bei Raumtemperatur mehrere Monate lang lagerstabil sind und die in der Wärme innerhalb kurzer Zeit aushärten. Derartige Mischungen finden als Form- oder Pressmassen Verwendung und die daraus hergestellten Formstoffe zeichnen sich durch gute Chemikalienbeständigkeit, gute elektrische Eigenschaften und geringe Neigung zur Spannungsrissbildung aus.

Die Formmassen bestehen aus einem Bindemittelsystem aus Epoxidharz und Epoxid-Härter sowie Füllstoffen und gegebenenfalls Zusatzstoffen wie Härtungsbeschleuniger, Gleitmittel, Farbstoffen.

Als Härtersysteme werden sog. latente Härter eingesetzt, die bei Raumtemperatur möglichst keine Vernetzungsreaktionen bedingen. Die Mischungen aus Epoxidharz und Härter sollen bei Temperaturen bis etwa 50° C möglichst lange verarbeitbar sein, sie müssen möglichst lagerstabil sein. Andererseits wünscht man jedoch bei erhöhter Temperatur eine möglichst schnelle Aushärtung, um eine wirtschaftliche Herstellung der Formteile mit Formzeiten von 0,5 bis 5 min bei 150° C zu erzielen.

Bei den Systemen auf der Basis von Epoxidharzen und quaternären Ammoniumsalzen, Carbonsäureanhydriden, Dicyandiamid oder aromatischen Aminen als Härter oder auch bei vorvernetzten Epoxidharzen war dieses Verhältnis von Lagerstabilität bei Raumtemperatur und Aushärtegeschwindigkeit bei erhöhter Temperatur nicht zufriedenstellend.

Es ist aus US-PS 2 773 048 bekannt, dass sich mit einem Gemisch aus einem festen Epoxidharz und 4,4'-Diaminodiphenylmethan als Härter Pressmassen mit guter Lagerstabilität herstellen lassen. Die daraus hergestellten Formkörper benötigen allerdings eine relativ lange Härtungszeit und besitzen die Nachteile einer ungenügenden Wärmefestigkeit und einer für elektrotechnische Zwecke nicht ausreichenden Kriechstromfestigkeit.

Diese Nachteile werden durch das Verfahren gemäss DE-PS 1 061 067 überwunden, nach dem Pressmassen auf Basis flüssiger Bisphenoldiglycidyläther und 4,4'-Diaminodiarylalkanen hergestellt werden, die eine verhältnismässig lange Haltbarkeit bei Zimmertemperatur aufweisen. Dabei wird ein durch einen massvollen und genau dosierten, längere Zeit währenden Reifungsprozess bei Temperaturen unter 100° C, vorzugsweise zwischen 20 und 50° C, aus flüssigem Diglycidylpolyäther und 4,4'-Diaminodiphenylalkan erhaltenes festes, jedoch noch schmelzbares, lösliches Reaktionsprodukt mit Füllstoffen und gegebenenfalls Trennmitteln und Pigmenten zu Pressmassen langer Lagerfähigkeit bei Raumtemperatur mit hoher Umsetzungsgeschwindigkeit bei Härtungstemperatur vermahlen, die zu wärmefesten, gut entformbaren und kriechstromfesten Formteilen führen. Dieses Verfahren weist den erheblichen Nachteil auf, dass ein vielstündiger Reifungsvorgang bei niedrigen Temperaturen erforderlich ist, so dass die Herstellung von Pressmassen in neuzeitlich eingerichteten Fertigungsanlagen auf Schwierigkeiten stösst, insbesondere da der Reifungsprozess sorgfältiger Überwachung bedarf, damit er im gewünschten Reifezustand abgebrochen werden kann. Eine technisch und wirtschaftlich befriedigende Pressmassenherstellung ist also auf diese Weise nicht möglich.

Die CH-A-637 150 offenbart ebenfalls Formmassen auf Basis von Addukten aus einem flüssigen, niedermolekularen Epoxidharz und 4,4'-Diaminodiarylalkanen, die hervorragende mechanische und elektrische Eigenschaften besitzen.

Die Herstellung der Addukte erfolgt durch Umsetzung flüssiger Epoxidharze mit aufgeschmolzenem aromatischem Diamin bei Temperaturen von 140 bis 150° C, wobei das aromatische Diamin praktisch tropfenweise zum Epoxidharz zudosiert wird.

Auch dabei ist eine wirtschaftliche Herstellung der Addukte nicht möglich.

Eine Verbesserung der Wirtschaftlichkeit ergibt sich nach dem Verfahren gemäss DE-PS 11 98 999, bei dem Epoxidharze und Diaminodiphenylalkane in einem Ketonlösungsmittel gelöst und durch Erwärmen bei Temperaturen zwischen 90 und 130° C getrocknet werden. Die Ketone bewirken dabei eine Verzögerung der Polyaddition, so dass sich gut lagerstabile Addukte herstellen lassen. Nachteilig ist allerdings der Verfahrensschritt des Lösens der Reaktanten in einem Lösungsmittel und dessen anschliessende Verdampfung.

Ebenfalls Addukte aus flüssigen Epoxidharzen mit Polyaminen werden gemäss DE-PS 22 30 653 eingesetzt, wobei die Bindemittel aus zwei verschiedenen Epoxidharz-Addukttypen zusammengesetzt sind, Addukten mit Epoxi- und Addukten mit Aminoendgruppen. Abgesehen von dem erhöhten Aufwand zum Bereitstellen zweier Addukttypen sind die Möglichkeiten der Härtung und damit die Variabilität des Einsatzes dieser Systeme begrenzt.

Es bestand daher die Aufgabe, lagerstabile, wärmehärtbare Mischungen aus einem Bindemittel auf Epoxidharzbasis mit latentem Härter zu entwickeln, die wirtschaftlich einfach und ohne die vorgenannten Nachteile hergestellt werden können, und danüber hinaus teils verbesserte elektrische und mechanische Eigenschaften (z.B. Nachschwund, Wärmeformbeständigkeit) als die diaminodiarylalkangehärteten Epoxidharze besitzen. Die Lösung dieser Aufgabe erfolgt dadurch, dass die Mischungen als Epoxidharzkomponente ein Addukt aus einem hochmolekularen, festen Epoxidharz mit im Mittel mehr als einer Epoxidgruppe im Molekül und 4,4'-Diaminodiarylalkan enthalten, wobei das molare Verhältnis von 4,4'-Diaminodiphenylalkan zu Epoxidgruppen 0,01 bis 0,05 zu 1 beträgt.

Werden derartige Addukte vermahlen und mit den zur Härtung notwendigen Mengen von bekannten latenten Härtern vermischt, so erhält man Bindemittel-Mischungen, die überraschenderweise eine verbesserte Lagerstabilität bei gleichzeitig hoher Aushärtungsgeschwindigkeit bei erhöhten Temperaturen zeigen, so dass diese Mischungen zur Herstellung von Formkörpern oder Schichtstoffen bestens geeignet sind.

Die Addukte werden hergestellt, indem ein bei Raumtemperatur festes Epoxidharz mit im Mittel mehr als einer Epoxidgruppe im Molekül mit 4,4'-Diaminodiphenylalkan im molaren Verhältnis von 4,4'-Diaminodiarylalkan zu Epoxidgruppen von 0,01 bis 0,05 zu 1 bei Temperaturen von 100 bis 150° C umgesetzt werden.

Als Epoxidharze können harzartige, feste epoxidierte Kresol- oder Phenol-Formaldehyd-Novolakharze, feste substituierte oder unsubstituierte Bisphenol-A-Glycidyläther oder auch cycloaliphatische Epoxidharze oder Epoxidharzgemische eingesetzt werden. Diese Harze haben einen Epoxidäquivalent > 176 und einen Erweichungspunkt > 40° C.

Als 4,4'Diaminodiarylalkan eignen sich beispielsweise 4,4'Diaminodiphenylmethan, 4,4'-Diaminodiphenyläthan, 4,4'-Diaminodiphenyldimethylmethan oder 4,4'-Diamino-3,3'-dimethyldiphenylmethan.

Im Gegensatz zu den aus der Literatur bekannten Addukten aus Epoxidharz und 4,4'-Diaminodiarylalkan, die pro Epoxidäquivalent des Harzes 0,2 bis 0,35 Mol 4,4'-Diaminodiarylalkan enthalten, besteht das erfindungsgemässe Epoxidharzaddukt aus einem Reaktionsprodukt, bei dem pro Epoxidäquivalent des Harzes nur 0,01 bis 0,05 Mol 4,4'-Diaminodiarylalkan eingesetzt werden. Dieses Verhältnis bedingt, dass das Addukt nicht selbsthärtend ist, sondern zu seiner Aushärtung einen weiteren Härter benötigt. Es ist überraschend, dass trotz Verwendung weiterer Härter die gehärteten Pressmassen die gleichen guten mechanischen, elektrischen und chemischen Eigenschaften haben, wie die bekannten nur mit 4,4'-Diaminodiarylalkan gehärteten flüssigen Epoxidharze.

Es ist weiterhin überraschend, dass auch mit solchen latenten Härtern, die mit reinen Epoxidharzen kombiniert weniger lagerstabile Mischungen ergeben, gut lagerstabile Mischungen hergestellt werden können, wenn anstelle der reinen Epoxidharze die erfindungsgemässen Addukte eingesetzt werden.

Als weitere zusätzliche Härter eignen sich alle bekannten latenten Härter aus den Gruppen der Säureanhydride, Polykarbonsäuren oder der Phenol-Formaldehyd-Kondensationsprodukte.

Besonders gute Eigenschaften und besondere Wirtschaftlichkeit haben Formmassen, die die erfindungsgemässen Bindemittel aus Epoxidharzaddukt sowie die in saurer Reaktion entstandenen Phenolharze (Novolake) enthalten.

Die Mischungsverhältnisse Epoxidharzaddukt zu Novolak werden auf die OH-Zahl der Novolake und die Epoxidzahl der Epoxidharze ausgerichtet. Bevorzugt werden äquimolare Verhältnisse eingesetzt. Daraus ergeben sich je nach Molekulargewicht der Komponenten Gewichtsverhältnisse, die zwischen 1:4 bis 4:1 vorzugsweise zwischen 3:1 bis 1:1 liegen. Die Reaktion beider Partner erfolgt während 40 bis 120 min bei Temperaturen im Bereich von 200 bis 120° C, vorzugsweise während 60 min bei 140° C.

Den Bindemittelgemischen aus Epoxidharzaddukt und Härter können zusätzlich noch geringe Mengen Beschleuniger zugefügt werden. Obwohl diese Zugaben von Beschleunigern nicht unbedingt erforderlich sind, sind sie jedoch zum Erzielen der in der Praxis bevorzugten kurzen Härtungszeiten geeignet. Derartige Beschleuniger sind z.B. Amine wie Dimethylamin, Dimethylaminoäthylphenol, Metallhalogenide, z.B. Bortrifluorid, Zink oder Zinkchlorid, Acetylacetonate oder Imidazole.

Die Herstellung der Epoxidharzaddukte erfolgt durch Aufschmelzen der festen Epoxidharze und der 4,4'-Diaminodiarylalkane und Vermischen der flüssigen Reaktanten bei Temperaturen oberhalb 100° C. Es ist dabei nicht von Bedeutung, ob die Einsatzprodukte getrennt aufgeschmolzen und dann vermischt werden, oder ob sie zuvor als Pulver oder Granulat miteinander vorgemischt und gemeinsam aufgeschmolzen und intensiv vermengt werden.

Die Reaktion ist innerhalb von 5-10 min beendet. Danach lässt man das Reaktionsgemisch erkalten. Die Addukte haben einen Erweichungspunkt von > 50° C. Sie werden bei Raumtemperatur gemahlen und mit einem latenten Härter und den gewünschten Füll- und Zusatzstoffen vermischt. Die so erhaltenen Mischungen sind bei Raumtemperatur lagerstabil und rieselfähig und härten bei Erhitzen innerhalb kurzer Zeit zu geformten Produkten oder zu einheitlichen Schichten mit guten Eigenschaften aus. Sie können daher zur Herstellung von Formkörpern oder Schichtstoffen verwendet werden. Die mit den erfindungsgemässen Mischungen hergestellten Produkte zeichnen sich durch eine besonders gute Alterungs- und Witterungsbeständigkeit aus. Insbesondere die elektrischen Eigenschaften bleiben auch nach langer extremer Bewitterung nahezu unverändert.

*Beispiele*

Mischungen aus Bindemitteln auf Epoxidharzbasis und latentem Härter werden mit Beschleuniger, Füll- und Zusatzstoffen entsprechend der folgenden Grundrezeptur nach Vermahlung der Rohstoffe im Kneter hergestellt:

|  | Gew.-Teile |
|---|---|
| Epoxidharz (addukt) | 20 |
| latenter Härter | 10 |
| Beschleuniger (2-Heptyldecylimidazol) | 0,1 |
| Titandioxid | 35 |
| Kaolin | 25 |
| Faserstoffe | 6 |
| Farbstoff | 2,4 |
| Trennmittel | 1,5 |

Aus den lagerstabilen Mischungen werden durch 60minütiges Verpressen bei 140° C Probekörper hergestellt und mit diesen die in der folgenden Tabelle aufgelisteten Eigenschaften bestimmt.

Dabei werden in den verschiedenen Beispielen und Vergleichsbeispielen die folgenden Bindemittel und Härter eingesetzt:

*Beispiel 1*

Epoxidharzaddukt: 275 kg eines handelsüblichen festen Epoxidharzes auf phenolischer Basis mit einem Epoxidäquivalent von 220 und einem EP von 64° C werden auf 135° C erwärmt und dabei aufgeschmolzen. Unter kräftigem Rühren werden innerhalb von 10 min 4 kg 4,4'-Diaminodiphenylmethan zugegeben und die ansteigende Temperatur des Reaktionsgefässes durch Kühlen auf etwa 145° C gehalten. Nach Abklingen der Reaktion werden innerhalb von 30 min weitere 4 kg 4,4'-Diaminodiphenylmethan zugegeben und die Reaktionsmischung so gekühlt, dass die Temperatur nicht über 150° C steigt. Danach belässt man das Reaktionsgemisch noch weitere 90 min bei 140° C und lässt dann das Reaktionsprodukt abkühlen. Das erstarrte Produkt wird fein gemahlen. Es hat folgende Eigenschaften:
Schmelzviskosität bei 150° C: 1400 mPa·s
Erweichungspunkt (Ring und Kugel): 92° C
    Härter: Einfestes handelsübliches sauer kondensiertes Phenol-Formaldehyd-Kondensationsprodukt mit einem mittleren Molekulargewicht von 580 und einer OH-Zahl von 540.
Mischungsverhältnis Epoxidharzaddukt: Härter = 2,5:1

*Beispiel 2*

Epoxidharzaddukt: Analog Beispiel 1 werden 275 kg des Epoxidharzes aus Beispiel 1 mit 3 kg 4,4'-Diaminodiphenyläthan umgesetzt und das dabei erhaltene Produkt eingesetzt.
    Härter: Analog Beispiel 1
Mischungsverhältnis Epoxidharzaddukt zu Härter: 2,5:1

*Beispiel 3*

Epoxidharzaddukt aus Beispiel 1
Härter: Phthalsäureanhydrid
Mischungsverhältnis Epoxidharzaddukt zu Härter 1,8:1.

*Vergleichsbeispiel 1*

Bindemittelsystem aus einem flüssigen Epoxidharz auf Basis Bisphenol A mit einem Epoxidäquivalent von 188 und 4,4'-Diaminodiphenylmethan als Härter
Mischungsverhältnis Harz zu Härter: 3,8:1
Die der vorgegebenen Rezeptur entsprechende Mischung müsste zum Erzielen einer vollständigen Aushärtung 150 min bei 180° C gehärtet werden.

*Vergleichsbeispiel 2*

Epoxidharz analog Vergleichsbeispiel 1
Härter analog Beispiel 1
Mischungsverhältnis Harz zu Härter 1,8:1.

Erhaltene Eigenschaften:

| | Beispiel | | | Vergleichsbeispiel | |
|---|---|---|---|---|---|
| | 1 | 2 | 3 | 1 | 2 |
| Biegefestigkeit (N/mm²) | 55 | 53 | 68 | 56 | 42 |
| Schlagbiegefestigkeit (KJ/m²) | 4,1 | 4,2 | 3,5 | | |
| Kerbschlagzähigkeit (KJ/m²) | 2,2 | 2,1 | 2,5 | 2,1 | 1,5 |
| Nachschwund (%) | 0,02 | 0,1 | 0,04 | 0,15 | 0,25 |
| Wärmeformbeständigkeit (° C) | 155 | 147 | 125 | 105 | 67 |
| Dielektrischer Verlustfaktor | 0,02 | 0,02 | 0,072 | 0,03 | 0,04 |
| Dielektrizitätskonstante | 4,3 | 4,3 | 4,4 | 5,0 | 4,3 |
| Oberflächenwiderstand ($\Omega$) | $>10^{10}$ | $10^{11}$ | $10^{11}$ | $>10^{10}$ | $10^{11}$ |
| Spez. Widerstand ($\Omega$/cm) | $10^{14-15}$ | $10^{14-15}$ | $10^{14-15}$ | $10^{14-15}$ | $10^{14-15}$ |
| Wasseraufnahme (mg/100 g) | 15 | 20 | 25 | 25 | 60 |

**Patentansprüche**

1. Lagerstabile, wärmehärtbare Mischungen aus einem Bindemittel auf Epoxidharzbasis und latentem Härter sowie Füll- und gegebenenfalls Zusatzstoffen, dadurch gekennzeichnet, dass sie als Epoxidharzkomponente ein Addukt aus einem hochmolekularen, festen Epoxidharz mit im Mittel mehr als einer Epoxidgruppe im Molekül und 4,4'-Diaminodiarylalkan enthalten, wobei das molare Verhältnis von 4,4'-Diaminodiarylalkan zu Epoxidgruppen 0,01 bis 0,05 zu 1 beträgt.

2. Mischungen nach Anspruch 1, dadurch gekennzeichnet, dass sie ein Addukt aus einem hochmolekularen Epoxidharz und 4,4'-Diaminodiphenylmethan enthalten.

3. Mischungen nach Anspruch 1 und 2, dadurch gekennzeichnet, dass sie als Härter ein Phenol-Formaldehydkondensationsprodukt enthalten.

4. Mischungen nach Anspruch 1 und 2, dadurch gekennzeichnet, dass diese erhalten worden sind, indem ein bei Raumtemperatur festes Epoxidharz mit im Mittel mehr als einer Epoxidgruppe im Molekül mit Diaminodiarylalkan im molaren Verhältnis von 4,4'-Diaminodiphenylalkan zu Epoxidgruppen von 0,01 bis 0,05 zu 1 bei Temperaturen von 100 bis 150° C umgesetzt wird und das so erhaltene Addukt nach dem Erkalten vermahlen und mit dem latenten Härter und den Füll- und Zusatzstoffen vermischt wird.

5. Verwendung der Mischungen nach einem der Ansprüche 1-4 zur Herstellung von Formkörpern oder Schichtstoffen.

**Claims**

1. A storage stable heat curable mixture comprising a binder material of an epoxy resin, a latent curing agent, fillers and if necessary additives, wherein the epoxy resin component is an adduct formed of a high molecular weight solid epoxy resin having an average of more than one epoxy group per molecule and 4,4'-diaminodiarylalkane wherein the molecular ratio of the 4,4'-diaminodiarylalkane to epoxy group ranges from 0,01-0,05 to 1.

2. The storage stable heat curable mixture according to claim 1, wherein the adduct is formed from a high molecular epoxy resin and 4,4'-diaminodiphenylmethane.

3. The storage stable heat curable mixture according to claims 1 and 2, wherein the curing agent is a phenol formaldehyde condensation product.

4. The storage stable heat curable mixture according to claims 1 and 2, which is prepared by reacting an epoxy resin, solid at room temperature and having an average of more than one epoxy group in the molecule with diaminodiarylalkane at room temperature in a molecular ratio of diaminodiarylalkane to epoxy group of 0,01 0,05 alkane to 1 in a temperature range of 100 to 150° C, and the adduct obtained thereby is then ground after cooling and then mixed with the latent curing agent, the fillers and additives.

5. Use of the mixture of one of the claims 1 to 4 for the preparation of molded articles or composites.

**Revendications**

1. Mélanges thermodurcissables, stables en conservation, obtenus à partir d'un liant à base de résine époxyde et d'un durcisseur latent ainsi que de matières de charge et éventuellement d'additifs, caractérisés en ce qu'ils contiennent en tant que composant résine époxyde un produit d'addition obtenu à partir d'une résine époxyde solide à poids moléculaire élevé comportant en moyenne plus d'un groupe époxyde dans la molécule et d'un 4,4'-diaminodiarylalcane, le rapport molaire de 4,4'-diaminodiarylalcane aux groupes époxydes étant de 0,01 à 0,05 pour 1.

2. Mélanges selon la revendication 1, caractérisés en ce qu'ils contiennent un produit d'addition obtenu à partir d'une résine époxyde à poids moléculaire élevé et de 4,4'-diaminodiphénylméthane.

3. Mélanges selon la revendication 1 et 2, caractérisés en ce qu'ils contiennent en tant que durcisseur un produit de condensation phénol-formaldéhyde.

4. Mélanges selon la revendication 1 et 2, caractérisés en ce que l'on fait réagir à des températures de 100 à 150° C une résine époxyde solide à la température ambiante comportant en moyenne plus d'un groupe époxyde dans la molécule avec du diaminodiarylalcane dans un rapport molaire de 4,4'-diaminophénylalcane aux groupes époxydes de 0,01 à 0,05 pour 1 et que l'on broie après refroidissement le produit d'addition ainsi obtenu et qu'on le mélange avec le durcisseur latent et les matières de charge et les additifs.

5. Utilisation des mélanges selon l'une des revendications 1-4 pour la préparation de corps moulés ou de matières de revêtement.